# EUROPEAN PATENT SPECIFICATION

(11) **EP 4 539 442 B1**
(45) Date of publication and mention of the grant of the patent: **07.10.2026**
(21) Application number: 23823179.9
(22) Date of filing: 14.06.2023
(51) Int. Cl.: H04W 4/90, H04L 65/1069, H04W 4/02, H04W 4/80, H04W 76/18, H04W 76/14, H04W 76/50

(54) **CALL ESTABLISHMENT METHOD, DEVICE AND SYSTEM, TERMINAL, AND READABLE STORAGE MEDIUM**
ANRUFAUFBAUVERFAHREN, -VORRICHTUNG UND -SYSTEM, ENDGERÄT UND LESBARES SPEICHERMEDIUM
PROCÉDÉ, DISPOSITIF ET SYSTÈME D'ÉTABLISSEMENT D'APPEL, TERMINAL, ET SUPPORT DE STOCKAGE LISIBLE

(30) Priority: 16.06.2022 CN 202210687860
(43) Date of publication of application: 16.04.2025
(73) Proprietor: Vivo Mobile Communication Co., Ltd., Dongguan, Guangdong 523863 (CN)
(72) Inventor: WANG, Gang, Dongguan, Guangdong 523863 (CN)
(74) Representative: Murgitroyd & Company
(86) International application number: PCT/CN2023/100131
(87) International publication number: WO 2023/241613

(56) References cited:
- CN-A- 104 159 266
- CN-A- 105 472 769
- CN-A- 105 515 619
- CN-A- 108 616 844
- CN-A- 113 365 234
- CN-A- 115 103 053
- US-A1- 2015 245 166
- US-A1- 2020 084 609
- US-A1- 2022 110 187

## Description

### TECHNICAL FIELD

This application relates to the field of communication technologies, and specifically, to a call establishment method, a terminal, a system, and a readable storage medium.

### BACKGROUND

An emergency call service is a service with a high priority in a terminal. Once a user triggers the emergency call service of the terminal, the terminal needs to establish an emergency call immediately, so that the user can get help in time.

However, in an actual usage scenario of the emergency call service, due to hardware, software, network quality of an accessed network, or the like of the terminal, the terminal cannot ensure that each emergency call can be successfully established, resulting in a low success rate of the terminal in establishing a call.

US 2020/084609A1 provides a way to place a call from an initiating device capable of placing VoIP calls, such as a tablet computer, by routing the call through a proximate (i.e., nearby) proxy device, such as a smartphone.

US 2022/110187A1 discloses apparatuses, systems, and methods for emergency communications (e.g., voice calls and/or SMS messages) for UE's without cellular coverage (e.g., in non-cellular coverage).

### SUMMARY

An objective of embodiments of this application is to provide a call establishment method and apparatus, a terminal, a system, and a readable storage medium, so as to resolve a problem of a low success rate of a terminal in establishing a call.

According to a first aspect, an embodiment of this application provides a call establishment method defined in claim 1.

According to a second aspect, an embodiment of this application provides a terminal defined claim 12.

According to a third aspect, an embodiment of this application provides a call establishment system defined claim 7.

According to a fourth aspect, an embodiment of this application provides a readable storage medium defined claim 13.

Further advantageous embodiments of the present disclosure are indicated in the dependent claims.

It is to be understood that both the foregoing general description and the following detailed description are exemplary only, and are not restrictive of the present disclosure.

### BRIEF DESCRIPTION OF THE DRAWINGS

FIG. 1 is a flowchart of a call establishment method according to an embodiment of this application;
FIG. 2 is a diagram of a call establishment method according to an embodiment of this application;
FIG. 3 is a diagram of an interface of a call establishment method application according to an embodiment of this application;
FIG. 4 is a diagram of a call establishment system according to an embodiment of this application;
FIG. 5 is a diagram of a call establishment apparatus according to an embodiment of this application;
FIG. 6 is a diagram of a terminal according to an embodiment of this application; and
FIG. 7 is a diagram of hardware of a terminal according to an embodiment of this application.

### DETAILED DESCRIPTION

The technical solutions in the embodiments of this application are clearly described below with reference to the accompanying drawings in the embodiments of this application. It is clear that the described embodiments are merely some rather than all of the embodiments of this application.

In the specification and claims of this application, terms such as "first" and "second" are used to distinguish similar objects, rather than describe a specific sequence or order. It should be understood that, data used in such a manner is interchangeable in a proper circumstance, so that the embodiments of this application can be implemented in other orders than those illustrated or described herein. Moreover, objects distinguished by "first", "second", and the like are usually of a same type, and the numbers of the objects are not limited. For example, there may be one or more first objects. In addition, in the specification and claims, "and/or" represents at least one of associated objects, and the character "/" generally indicates an "or" relationship between the associated objects.

The following describes, in detail by using specific embodiments and application scenarios thereof with reference to the accompanying drawings, a call establishment method and apparatus, a terminal, a system, and a readable storage medium that are provided in the embodiments of this application.

Currently, among a variety of services of a terminal, an emergency call service is a service with a very high priority. For a user, once the emergency call service is triggered, the terminal needs to help the user to get through a call as soon as possible, so that the user can get help in time. However, in an actual usage scenario of the emergency call service, due to hardware, software, network quality of an accessed network, or the like of the terminal, the terminal cannot ensure that each emergency call can be successfully established, resulting in a low success rate of the terminal in establishing a call.

With continuous update and development of terminal devices, in daily life, one user may own a plurality of terminal devices at the same time. For example, one user owns a smartphone, a smartwatch, a notebook computer, a smart car, and the like at the same time. Because different terminals may access different networks, and a plurality of terminals may establish a connection between each other through one user, provided that one terminal has accessed a network, all other terminals may access the network through the terminal accessing the network. In a multi-terminal case, full network coverage and universally accessible connection ports can be basically met.

Therefore, to resolve the foregoing problem of a low success rate of a terminal in establishing a call, the embodiments of this application provide a call establishment method. In the call establishment method provided in the embodiments of this application, a first terminal may send, to an i^{th} second terminal in N second terminals in a case that an emergency call (for example, a target call in the embodiments of this application) fails to be established, a notification message used to indicate the second terminal to establish the emergency call; and may receive a target message sent by the i^{th} second terminal. In addition, the first terminal may send a notification message to an (i+1)^{th} second terminal in the N second terminals in a case that the target message indicates that the i^{th} second terminal fails to establish the emergency call and i is less than N. A distance between each of the N second terminals and the first terminal is less than or equal to a preset distance. According to this solution, in a case that the first terminal fails to establish the emergency call, the first terminal may indicate the i^{th} second terminal in the N second terminals at a distance to the first terminal less than or equal to the preset distance to establish the emergency call, and in a case that the i^{th} second terminal fails to establish the emergency call, the first terminal may further indicate the (i+1)^{th} second terminal in the N second terminals to establish the emergency call. That is, the first terminal may indicate a plurality of terminals to sequentially try to establish the emergency call, thereby improving a success rate of the terminal in establishing the emergency call.

It can be learned that, the call establishment method maximizes hardware, software, or network quality of accessed networks of different terminals, thereby improving a probability of successfully establishing the emergency call. Moreover, for a same user, because a plurality of terminals owned by the user may share a common user identity and share an emergency contact location of the user with each other, after any one of the terminals gets through the emergency call, a peer side can quickly obtain the location of the user, so that the user can get help.

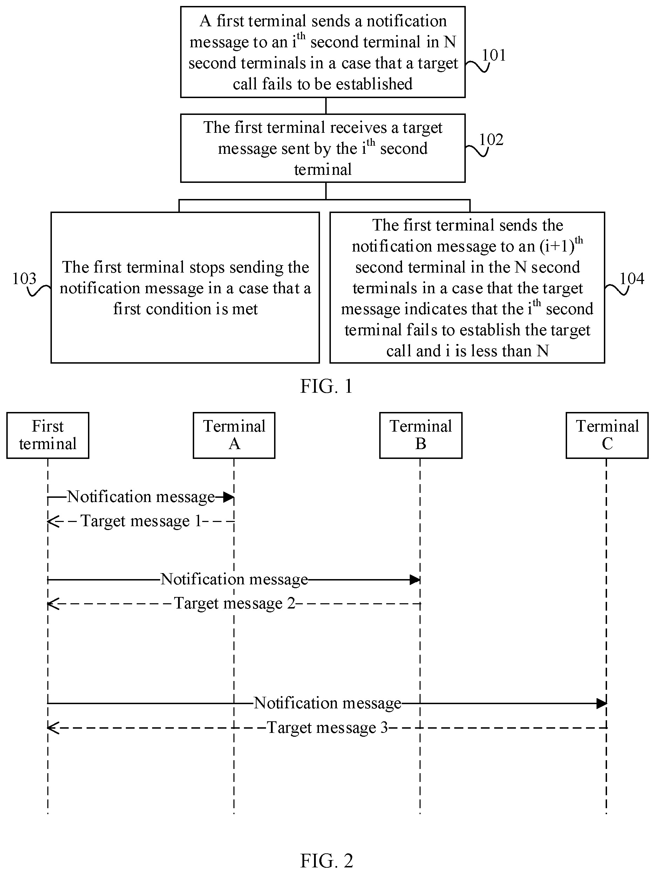

An embodiment of this application provides a call establishment method. FIG. 1 is a flowchart of a call establishment method according to an embodiment of this application. As shown in FIG. 1, the call establishment method provided in this embodiment of this application may include the following step 101 to step 103, or may include the following step 101, step 102, and step 104.

Step 101: A first terminal sends a notification message to an i^{th} second terminal in N second terminals in a case that a target call fails to be established.

In this embodiment of this application, the notification message is used to indicate the second terminal to establish the target call, N and i are both positive integers, and N is greater than or equal to i.

In this embodiment of this application, a distance between each of the N second terminals and the first terminal is less than or equal to a preset distance.

Optionally, in this embodiment of this application, the preset distance may be system default, or may be set by a user based on an actual usage requirement.

Optionally, in this embodiment of this application, the preset distance may be a distance that can ensure that the first terminal can perform short-range communication with each of the N second terminals.

Optionally, in this embodiment of this application, the short-range communication may include Bluetooth communication, wireless fidelity (Wireless Fidelity, Wi-Fi) communication, ZigBee (ZigBee) communication, and the like.

Optionally, in this embodiment of this application, the "target call fails to be established" may be understood as that the target call fails to be established in all possible target call establishment manners.

Optionally, in this embodiment of this application, after receiving the notification message, the i^{th} second terminal may first send a first response message (for example, a 100 Trying response message) to the first terminal, to reply to the first terminal that the notification message has been received, and then the i^{th} second terminal may start to establish the target call.

Optionally, in this embodiment of this application, the target call may be any call. For example, the target call may be a call initiated to any contact.

Optionally, in this embodiment of this application, the target call may be an emergency call.

Optionally, in this embodiment of this application, the emergency call may be used for the user to get rescue.

In this embodiment of this application, the notification message may include: location information of the first terminal and call type information.

In this embodiment of this application, the location information of the first terminal may indicate a location at which the first terminal is located when sending the notification message, and the call type information may indicate that the target call is an emergency call.

It may be understood that after receiving the notification message, the i^{th} second terminal may establish the emergency call according to the indication of the call type information included in the notification message.

Optionally, in this embodiment of this application, after receiving the notification message, if the i^{th} second terminal successfully establishes the emergency call, the i^{th} second terminal may send the location information of the first terminal to an object of the emergency call, so that the object of the emergency call can learn a specific location of the first terminal for accurate rescue.

It should be noted that, in a case that the i^{th} second terminal successfully establishes the emergency call, the i^{th} second terminal may alternatively send location information of the i^{th} second terminal to the object of the emergency call. Because a distance between the i^{th} second terminal and the first terminal is less than or equal to the preset distance, the object of the emergency call may also learn a location for rescue based on the location information of the i^{th} second terminal.

Optionally, in this embodiment of this application, the notification message may further include preset order information. The preset order information may indicate a preset order in which the notification message is sent to the N second terminals.

Optionally, in this embodiment of this application, if the first terminal and the N second terminals are terminals of a same user, the notification message may further include common user identity information corresponding to the user, so that the i^{th} second terminal can perform user identity information matching after receiving the notification message, to improve operation security.

In this embodiment of this application, when the target call is an emergency call, the notification message may include the location information of the first terminal and the call type information. Therefore, the notification message may be used to indicate that the i^{th} second terminal needs to establish an emergency call, and ensure that a location at which the emergency call is established is within the preset distance. In this way, a success rate of the terminal in establishing the emergency call can be improved, and accuracy of the location for emergency rescue can be ensured.

Step 102: The first terminal receives a target message sent by the i^{th} second terminal.

Optionally, in this embodiment of this application, the target message (for example, a 200 OK message) may indicate that the i^{th} second terminal successfully establishes the target call, or may indicate that the i^{th} second terminal fails to establish the target call.

Step 103: The first terminal stops sending the notification message in a case that a first condition is met.

In this embodiment of this application, the "first condition is met" includes either of the following:

(1) The target message indicates that the i^{th} second terminal successfully establishes the target call.

(2) The target message indicates that the i^{th} second terminal fails to establish the target call, and i is equal to N.

Optionally, in this embodiment of this application, in a case that the "first condition is met" includes (1), the first terminal does not need to establish the target call by using another second terminal. In this case, the first terminal may stop sending the notification message, to save a resource of the terminal.

It may be understood that, the "i is equal to N" in (2) means that the i^{th} second terminal is an N^{th} second terminal in the N second terminals, that is, the i^{th} second terminal is a last terminal in the N second terminals.

Optionally, in this embodiment of this application, in a case that the "first condition is met" includes (2), all the N second terminals fail to establish the target call. In this case, the entire target call establishment process ends, and the first terminal does not send the notification message to any second terminal.

Optionally, in this embodiment of this application, in a case that the "first condition is met" includes (2), the target message may include first sub-information. The first sub-information may be used to indicate that all the second terminals fail to establish the target call.

Step 104: The first terminal sends the notification message to an (i+1)^{th} second terminal in the N second terminals in a case that the target message indicates that the i^{th} second terminal fails to establish the target call and i is less than N.

It may be understood that the "i is less than N" means that the i^{th} second terminal is not the last terminal in the N second terminals.

Optionally, in this embodiment of this application, if the i^{th} second terminal fails to establish the target call, the i^{th} second terminal may send the target message to the first terminal. The target message may further include second sub-information. The second sub-information may be used to indicate that the first terminal needs to send the notification message to the (i+1)^{th} second terminal.

Optionally, in this embodiment of this application, after trying to establish the target call, the (i+1)^{th} second terminal may send a target message to the first terminal. If the target message indicates that the (i+1)^{th} second terminal successfully establishes the target call, or the target message indicates that the (i+1)^{th} second terminal fails to establish the target call and i+1 is equal to N, the first terminal stops sending the notification message. If the target message indicates that the (i+1)^{th} second terminal fails to establish the target call and i+1 is less than N, the first terminal may send the notification message to an (i+2)^{th} second terminal in the N second terminals. The rest may be deduced by analogy, until one of the N second terminals successfully establishes the target call, or all the N second terminals fail to establish the target call and the entire target call establishment process ends.

The call establishment method provided in this embodiment of this application is described below with reference to an accompanying drawing by using an example.

For example, as shown in FIG. 2, assuming that a terminal A, a terminal B, and a terminal C (that is, the N second terminals) are terminals at distances to the first terminal less than or equal to the preset distance, the terminal A is a 1^{st} terminal (that is, the i^{th} second terminal), the terminal B is a 2^{nd} terminal (that is, the (i+1)^{th} second terminal), and the terminal C is a 3^{rd} terminal (that is, the (i+2)^{th} second terminal), in a case that the target call fails to be established, the first terminal may send the notification message to the terminal A to indicate the terminal A to establish the target call. If the first terminal receives a target message 1 sent by the terminal A, and the target message 1 indicates that the terminal A fails to establish the target call, the first terminal may send the notification message to the terminal B. If the first terminal receives a target message 2 sent by the terminal B, and the target message 2 indicates that the terminal B fails to establish the target call, the first terminal may send the notification message to the terminal C. If the first terminal receives a target message 3 sent by the terminal C, and the target message 3 indicates that the terminal C successfully establishes the target call, the first terminal stops sending the notification message, and the entire target call establishment process ends.

In the call establishment method provided in this embodiment of this application, in a case that the first terminal fails to establish the target call, the first terminal may indicate the i^{th} second terminal in the N second terminals at a distance to the first terminal less than or equal to the preset distance to establish the target call, and in a case that the i^{th} second terminal fails to establish the target call, the first terminal may further indicate the (i+1)^{th} second terminal in the N second terminals to establish the target call. That is, the first terminal may indicate a plurality of terminals to sequentially try to establish the call, thereby improving a success rate of the terminal in establishing the call.

Optionally, in this embodiment of this application, step 104 may be specifically implemented by performing the following step 104a.

Step 104a: In a case that the target message indicates that the i^{th} second terminal fails to establish the target call and i is less than N, the first terminal determines the (i+1)^{th} second terminal from the N second terminals based on a preset order, and sends the notification message to the (i+1)^{th} second terminal.

In this embodiment of this application, the preset order is an order in which the first terminal sends the notification message to the N second terminals.

Optionally, in this embodiment of this application, the preset order may be arbitrarily set by the user based on an actual usage requirement, or determined by the first terminal based on network quality of a network accessed by each of the N second terminals.

It should be noted that, in an actual implementation, the preset order may alternatively be an order determined by the first terminal based on any other possible factor (for example, a hardware configuration of the terminal). This is not limited in this embodiment of this application.

Optionally, in this embodiment of this application, the first terminal may determine, based on the preset order, a second terminal at an (i+1)^{th} location in the preset order as the (i+1)^{th} second terminal.

In this embodiment of this application, because the first terminal may determine the (i+1)^{th} second terminal based on the preset order, and send the notification message to the (i+1)^{th} second terminal, the first terminal may sequentially send the notification message to a second terminal based on the preset order, thereby improving flexibility of the terminal in sending the notification message.

The following describes in detail a specific method in which the first terminal determines the preset order based on the network quality of the network accessed by each second terminal.

Optionally, in this embodiment of this application, in a case that the first terminal fails to establish the target call, the call establishment method provided in this embodiment of this application may further include the following step 105 to step 107.

Step 105: The first terminal sends a first message to the N second terminals.

In this embodiment of this application, the first message is used to indicate the N second terminals to feed back network quality of networks accessed by the N second terminals.

Step 106: The first terminal receives feedback messages of the N second terminals.

In this embodiment of this application, each of the feedback messages of the N second terminals includes network quality information of a network accessed by a corresponding second terminal.

For example, assuming that the N second terminals are a terminal 1 and a terminal 2, a feedback message of the terminal 1 includes network quality information of a network accessed by the terminal 1, and a feedback message of the terminal 2 includes network quality information of a network accessed by the terminal 2.

Step 107: The first terminal determines the preset order based on the feedback messages of the N second terminals.

Optionally, in this embodiment of this application, after receiving the feedback messages of the N second terminals, the first terminal may determine the preset order based on the network quality of the network accessed by each second terminal.

For example, assuming that the N second terminals are a terminal a, a terminal b, and a terminal c, network quality of a network accessed by the terminal a is better than network quality of a network accessed by the terminal b, and the network quality of the network accessed by the terminal b is better than network quality of a network accessed by the terminal c, based on a feedback message of the terminal a, a feedback message of the terminal b, and a feedback message of the terminal c, the first terminal may determine that the preset order is the terminal a, the terminal b, and the terminal c. It can be learned that, better network quality of an accessed network indicates a higher ranking of a corresponding second terminal in the preset order.

In this embodiment of this application, in a case that the target call fails to be established, the first terminal may determine the preset order of the N second terminals based on the network quality of the network accessed by each second terminal. Therefore, when sending the notification message, the first terminal may first send the notification message to a second terminal with better network quality, so that the terminal can successfully establish the call faster.

Optionally, in this embodiment of this application, if the target message indicates that the i^{th} second terminal successfully establishes the target call, after step 102, the call establishment method provided in this embodiment of this application may further include the following step 108.

Step 108: The first terminal answers the target call through short-range communication between the first terminal and the i^{th} second terminal.

Optionally, in this embodiment of this application, the target call established by the i^{th} second terminal may be answered on the first terminal through short-range communication between the first terminal and the i^{th} second terminal. Alternatively, the target call may be directly answered on the i^{th} second terminal.

It may be understood that, because the distance between the i^{th} second terminal and the first terminal is less than or equal to the preset distance, when the target call is answered on the i^{th} second terminal, the user may also talk to an object of the target call.

For specific descriptions of short-range communication, refer to related descriptions in step 101. To avoid repetition, details are not described herein again.

In this embodiment of this application, because the first terminal may answer the target call through short-range communication between the first terminal and the i^{th} second terminal, the target call established by the i^{th} second terminal can be answered on the first terminal, thereby improving flexibility in answering the target call.

Optionally, in this embodiment of this application, if the target message indicates that the i^{th} second terminal successfully establishes the target call, after step 102, the call establishment method provided in this embodiment of this application may further include the following step 109.

Step 109: The first terminal displays a first selection identifier and a second selection identifier.

In this embodiment of this application, the first selection identifier is used to select the first terminal as an answering end of the target call, and the second selection identifier is used to select the i^{th} second terminal as an answering end of the target call.

Optionally, in this embodiment of this application, the first selection identifier may be any identifier that can indicate the first terminal. For example, the first selection identifier is a text identifier or an image identifier of the first terminal.

Optionally, in this embodiment of this application, the second selection identifier may be any identifier that can indicate the i^{th} second terminal. For example, the second selection identifier is a text identifier or an image identifier of the i^{th} second terminal.

Optionally, in this embodiment of this application, both the first selection identifier and the second selection identifier may be identifiers of any shape, color, or size. This is not limited in this embodiment of this application.

Optionally, in this embodiment of this application, the first terminal may display the first selection identifier and the second selection identifier in a call establishment interface. The call establishment interface is configured to display related information in a process of establishing the target call by using the second terminal.

It should be noted that, in an actual implementation, the first terminal may display the first selection identifier and the second selection identifier in any possible interface, which may be specifically set based on a usage requirement of the user, and is not limited in this embodiment of this application.

Optionally, in this embodiment of this application, the first terminal may select the first terminal as an answering end of the target call based on a first input of the user for the first selection identifier.

Optionally, in this embodiment of this application, the first terminal may select the i^{th} second terminal as an answering end of the target call based on a second input of the user for the second selection identifier.

Optionally, in this embodiment of this application, both the first input and the second input may be inputs in any possible form such as a floating input, a touch input, or a voice input.

The call establishment method provided in this embodiment of this application is described below with reference to an accompanying drawing by using an example.

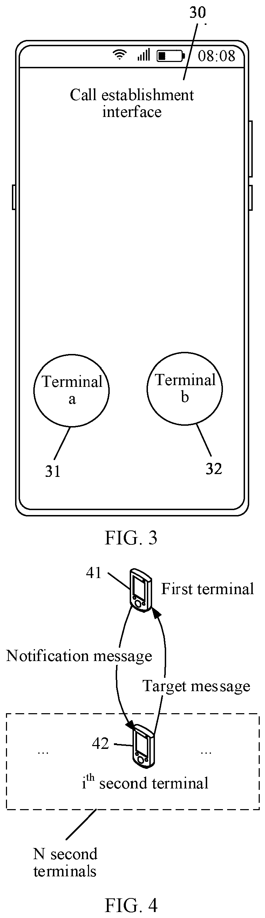

For example, as shown in FIG. 3, assuming that a terminal a is the first terminal, a terminal b is the i^{th} second terminal, and the terminal b successfully establishes the target call, after receiving a target message sent by the terminal b, the terminal a may display a call establishment interface 30, and display an identifier 31 (that is, the first selection identifier) and an identifier 32 (that is, the second selection identifier) in the call establishment interface 30. It can be seen that the identifier 31 is a text identifier "terminal a", and the identifier 32 is a text identifier "terminal b". Therefore, the user may trigger, through a single-tap input (that is, the first input) on the identifier 31, the terminal a to select the terminal a as an answering end of the target call. Alternatively, the user may trigger, through a single-tap input (that is, the second input) on the identifier 32, the terminal a to select the terminal b as an answering end of the target call. In this way, flexibility in answering the call can be improved. In this embodiment of this application, after the i^{th} second terminal successfully establishes the target call, the first terminal may display the first selection identifier for selecting the first terminal as an answering end of the target call and the second selection identifier for selecting the i^{th} second terminal as an answering end of the target call, for the user to select an answering end of the target call, so that flexibility of the terminal in answering the call can be improved.

Optionally, in this embodiment of this application, the call establishment method provided in this embodiment of this application may further include the following step 110.

Step 110: The first terminal displays target information.

In this embodiment of this application, the target information is used to indicate a terminal that currently establishes the target call.

Optionally, in this embodiment of this application, the first terminal may display the target information in the call establishment interface.

It should be noted that, in an actual implementation, the first terminal may display the target information in any possible interface, which may be specifically set based on a usage requirement of the user, and is not limited in this embodiment of this application.

Optionally, in this embodiment of this application, the target information may be any possible information such as text information or image information that can indicate the terminal that currently establishes the target call.

For example, assuming that the terminal that currently establishes the target call is a terminal A, the first terminal may display text information "terminal A" (that is, the target information), to indicate that the terminal that currently establishes the target call is the terminal A.

In this embodiment of this application, the first terminal may display the target information for indicating the terminal that currently establishes the target call, so that the user can learn, based on the target information, the terminal that currently tries to establish the target call, thereby improving human-computer interaction performance and user experience.

An embodiment of this application further provides a call establishment system. FIG. 4 is a diagram of a call establishment system according to an embodiment of this application. As shown in FIG. 4, the system includes a first terminal 41 and N second terminals. The first terminal 41 may be configured to send a notification message to an i^{th} second terminal 42 in the N second terminals in a case that a target call fails to be established. A distance between each of the N second terminals and the first terminal is less than or equal to a preset distance, the notification message is used to indicate the second terminal to establish the target call, N and i are both positive integers, and N is greater than or equal to i. The i^{th} second terminal 42 may be configured to establish the target call in a case that the notification message is received, and send a target message to the first terminal 41 based on a result of establishing the target call. The first terminal 41 may be further configured to receive the target message sent by the i^{th} second terminal 42, and send the notification message to an (i+1)^{th} second terminal in the N second terminals in a case that the target message indicates that the i^{th} second terminal 42 fails to establish the target call and i is less than N.

In a possible implementation, the target call may be an emergency call. The notification message may include: location information of the first terminal and call type information. The call type information indicates that the target call is an emergency call.

In a possible implementation, the first terminal may be configured to determine the (i+1)^{th} second terminal from the N second terminals based on a preset order, and send the notification message to the (i+1)^{th} second terminal.

In a possible implementation, the first terminal may be further configured to: in a case that the target call fails to be established, send a first message to the N second terminals, receive feedback messages of the N second terminals, and determine the preset order according to the feedback messages of the N second terminals. The first message is used to indicate the N second terminals to feed back network quality of networks accessed by the N second terminals. Each feedback message includes network quality information of a network accessed by a corresponding second terminal.

In a possible implementation, the target message indicates that the i^{th} second terminal successfully establishes the target call. The first terminal may be further configured to: after the target message sent by the i^{th} second terminal is received, answer the target call through short-range communication between the first terminal and the i^{th} second terminal.

In a possible implementation, the target message indicates that the i^{th} second terminal successfully establishes the target call. The first terminal may be further configured to display a first selection identifier and a second selection identifier after the target message sent by the i^{th} second terminal is received. The first selection identifier is used to select the first terminal as an answering end of the target call, and the second selection identifier is used to select the i^{th} second terminal as an answering end of the target call.

In a possible implementation, the first terminal may be further configured to display target information. The target information is used to indicate a terminal that currently establishes the target call.

In the call establishment system provided in this embodiment of this application, the first terminal may be configured to: in a case that the target call fails to be established, indicate the i^{th} second terminal in the N second terminals at a distance to the first terminal less than or equal to the preset distance to establish the target call; and in a case that the i^{th} second terminal fails to establish the target call, further indicate the (i+1)^{th} second terminal in the N second terminals to establish the target call. That is, the first terminal may be configured to indicate a plurality of terminals to sequentially try to establish the call, thereby improving a success rate of the terminal in establishing the call.

For specific beneficial effects of the implementations in this embodiment, refer to beneficial effects of corresponding implementations in the foregoing method embodiment. To avoid repetition, details are not described herein again.

The call establishment method provided in the embodiments of this application may be performed by a call establishment apparatus. In the embodiments of this application, the call establishment apparatus provided in the embodiments of this application is described by using an example in which the call establishment apparatus performs the call establishment method.

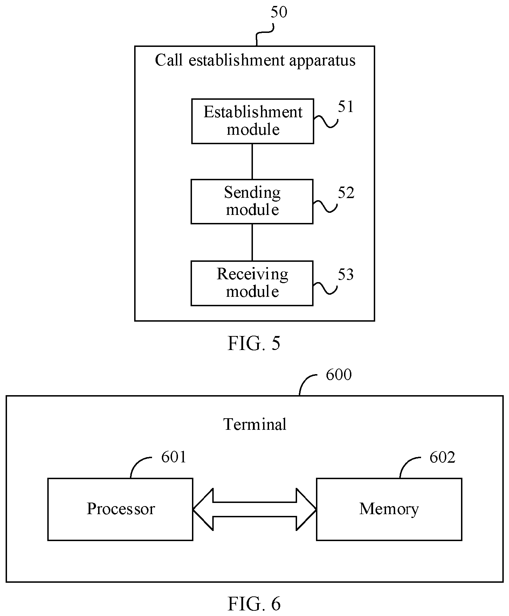

With reference to FIG. 5, an embodiment of this application provides a call establishment apparatus 50. The call establishment apparatus 50 includes an establishment module 51, a sending module 52, and a receiving module 53. The sending module 52 may be configured to send a notification message to an i^{th} second terminal in N second terminals in a case that the establishment module 51 fails to establish a target call. The notification message is used to indicate the second terminal to establish the target call, N and i are both positive integers, and N is greater than or equal to i. The receiving unit 53 may be configured to receive a target message sent by the i^{th} second terminal. The sending module 52 may be further configured to send the notification message to an (i+1)^{th} second terminal in the N second terminals in a case that the target message indicates that the i^{th} second terminal fails to establish the target call and i is less than N. A distance between each of the N second terminals and the call establishment apparatus 50 is less than or equal to a preset distance.

In a possible implementation, the target call may be an emergency call. The notification message includes: location information of the call establishment apparatus 50 and call type information. The call type information indicates that the target call is an emergency call.

In a possible implementation, the sending module 52 may include a determining sub-module and a sending sub-module. The determining sub-module may be configured to determine the (i+1)^{th} second terminal from the N second terminals based on a preset order. The sending sub-module may be configured to send the notification message to the (i+1)^{th} second terminal.

In a possible implementation, the call establishment apparatus 50 may further include a determining module. The sending module 52 may be further configured to send a first message to the N second terminals in a case that the establishment module 51 fails to establish the target call. The first message is used to indicate the N second terminals to feed back network quality of networks accessed by the N second terminals. The receiving module 53 may be further configured to receive feedback messages of the N second terminals. Each feedback message includes network quality information of a network accessed by a corresponding second terminal. The determining module may be configured to determine the preset order according to the feedback messages of the N second terminals received by the receiving module 53.

In a possible implementation, the target message indicates that the i^{th} second terminal successfully establishes the target call, and the call establishment apparatus 50 may further include an answering module. The answering module may be configured to: after the receiving module 53 receives the target message sent by the i^{th} second terminal, answer the target call through short-range communication between the call establishment apparatus 50 and the i^{th} second terminal.

In a possible implementation, the target message indicates that the i^{th} second terminal successfully establishes the target call, and the call establishment apparatus 50 may further include a first display module. The first display module may be configured to display a first selection identifier and a second selection identifier after the receiving module 53 receives the target message sent by the i^{th} second terminal. The first selection identifier is used to select the call establishment apparatus 50 as an answering end of the target call, and the second selection identifier is used to select the i^{th} second terminal as an answering end of the target call.

In a possible implementation, the call establishment apparatus 50 may further include a second display module. The second display module may be configured to display target information. The target information is used to indicate a terminal that currently establishes the target call.

In the call establishment apparatus provided in this embodiment of this application, in a case that the call establishment apparatus fails to establish the target call, the call establishment apparatus may indicate the i^{th} second terminal in the N second terminals at a distance to the call establishment apparatus less than or equal to the preset distance to establish the target call, and in a case that the i^{th} second terminal fails to establish the target call, the call establishment apparatus may further indicate the (i+1)^{th} second terminal in the N second terminals to establish the target call. That is, the call establishment apparatus may indicate a plurality of terminals to sequentially try to establish the call, thereby improving a success rate in establishing the call.

The call establishment apparatus in this embodiment of this application may be an electronic device, or may be a component in the electronic device, for example, an integrated circuit or a chip. The electronic device may be a terminal or a device other than the terminal. For example, the electronic device may be a mobile phone, a tablet computer, a notebook computer, a palm computer, an in-vehicle electronic device, a mobile internet device (Mobile Internet Device, MID), an augmented reality (augmented reality, AR)/virtual reality (virtual reality, VR) device, a robot, a wearable device, an ultra-mobile personal computer (ultra-mobile personal computer, UMPC), a netbook, or a personal digital assistant (personal digital assistant, PDA), or may be a server, a network attached storage (Network Attached Storage, NAS), a personal computer (personal computer, PC), a television (television, TV), a teller machine, or a self-service machine, which is not specifically limited in this embodiment of this application.

The call establishment apparatus in this embodiment of this application may be an apparatus with an operating system. The operating system may be an android (Android) operating system, an ios operating system, or another possible operating system, which is not specifically limited in this embodiment of this application.

The call establishment apparatus provided in this embodiment of this application can implement processes implemented in the method embodiments of FIG. 1 to FIG. 3. To avoid repetition, details are not described herein again.

As shown in FIG. 6, an embodiment of this application further provides a terminal 600, including a processor 601 and a memory 602. The memory 602 stores a program or instruction executable on the processor 601, and when the program or instruction is executed by the processor 601, steps of the foregoing call establishment method embodiment are implemented, and the same technical effects can be achieved. To avoid repetition, details are not described herein again.

It should be noted that, the terminal in this embodiment of this application includes the foregoing electronic device.

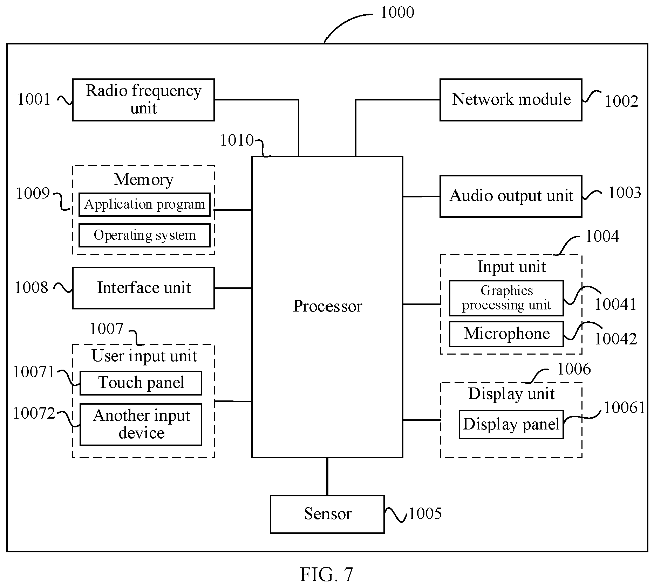

FIG. 7 is a diagram of a hardware structure of a terminal according to an embodiment of this application.

The terminal 1000 includes but is not limited to components such as a radio frequency unit 1001, a network module 1002, an audio output unit 1003, an input unit 1004, a sensor 1005, a display unit 1006, a user input unit 1007, an interface unit 1008, a memory 1009, and a processor 1010.

Persons skilled in the art may understand that the terminal 1000 may further include a power supply (such as a battery) for supplying power to the components. The power supply may be logically connected to the processor 1010 by using a power management system, to implement functions such as charging, discharging, and power consumption management by using the power management system. The terminal structure shown in FIG. 7 does not constitute a limitation on the terminal, and the terminal may include more or fewer components than shown those shown in the figure, or combine some components, or have a different component arrangement. Details are not described herein.

The radio frequency unit 1001 may be configured to send a notification message to an i^{th} second terminal in N second terminals in a case that the processor 1010 fails to establish a target call, where the notification message is used to indicate the second terminal to establish the target call, N and i are both positive integers, and N is greater than or equal to i; receive a target message sent by the i^{th} second terminal; and send the notification message to an (i+1)^{th} second terminal in the N second terminals in a case that the target message indicates that the i^{th} second terminal fails to establish the target call and i is less than N. A distance between each of the N second terminals and the terminal 1000 is less than or equal to a preset distance.

In a possible implementation, the target call may be an emergency call. The notification message includes: location information of the terminal 1000 and call type information. The call type information indicates that the target call is an emergency call.

In a possible implementation, the processor 1010 may be specifically configured to determine the (i+1)^{th} second terminal from the N second terminals based on a preset order. The radio frequency unit 1001 may be specifically configured to send the notification message to the (i+1)^{th} second terminal.

In a possible implementation, the radio frequency unit 1001 may be further configured to send a first message to the N second terminals in a case that the processor 1010 fails to establish the target call, where the first message is used to indicate the N second terminals to feed back network quality of networks accessed by the N second terminals; and receive feedback messages of the N second terminals. Each feedback message includes network quality information of a network accessed by a corresponding second terminal. The processor 1010 may be further configured to determine the preset order according to the feedback messages of the N second terminals received by the receiving module 1001.

In a possible implementation, the target message indicates that the i^{th} second terminal successfully establishes the target call. The processor 1010 may be further configured to: after the radio frequency unit 1001 receives the target message sent by the i^{th} second terminal, answer the target call through short-range communication between the terminal 1000 and the i^{th} second terminal.

In a possible implementation, the target message indicates that the i^{th} second terminal successfully establishes the target call. The display unit 1006 may be configured to display a first selection identifier and a second selection identifier after the radio frequency unit 1001 receives the target message sent by the i^{th} second terminal. The first selection identifier is used to select the terminal 1000 as an answering end of the target call, and the second selection identifier is used to select the i^{th} second terminal as an answering end of the target call.

In a possible implementation, the display unit 1006 may be further configured to display target information. The target information is used to indicate a terminal that currently establishes the target call.

In the terminal provided in this embodiment of this application, in a case that the terminal fails to establish the target call, the terminal may indicate the i^{th} second terminal in the N second terminals at a distance to the terminal less than or equal to the preset distance to establish the target call, and in a case that the i^{th} second terminal fails to establish the target call, the terminal may further indicate the (i+1)^{th} second terminal in the N second terminals to establish the target call. That is, the terminal may indicate a plurality of terminals to sequentially try to establish the call, thereby improving a success rate of the terminal in establishing the call.

For specific beneficial effects of the implementations in this embodiment, refer to beneficial effects of corresponding implementations in the foregoing method embodiment. To avoid repetition, details are not described herein again.

It should be understood that in this embodiment of this application, the input unit 1004 may include a graphics processing unit (Graphics Processing Unit, GPU) 10041 and a microphone 10042. The graphics processing unit 10041 processes image data of a static picture or a video that is obtained by an image capture apparatus (such as a camera) in a video capture mode or an image capture mode. The display unit 1006 may include a display panel 10061, and the display panel 10061 may be configured in a form of a liquid crystal display, an organic light emitting diode, or the like. The user input unit 1007 includes at least one of a touch panel 10071 and another input device 10072. The touch panel 10071 is also referred to as a touchscreen. The touch panel 10071 may include two parts: a touch detection apparatus and a touch controller. The another input device 10072 may include but is not limited to a physical keyboard, a functional button (such as a volume control button or a switch button), a track ball, a mouse, or a joystick. Details are not described herein.

The memory 1009 may be configured to store a software program and various data. The memory 1009 may mainly include a first storage area for storing a program or instruction and a second storage area for storing data. The first storage area may store an operating system, an application program or instruction required for at least one function (such as a sound playing function or an image playing function), and the like. In addition, the memory 1009 may include a volatile memory or a non-volatile memory, or the memory 1009 may include both a volatile and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchronous link dynamic random access memory (Synch Link DRAM, SLDRAM), and a direct rambus dynamic random access memory (Direct Rambus RAM, DRRAM). The memory 1009 in this embodiment of this application includes but is not limited to these and any other memory of a suitable type.

The processor 1010 may include one or more processing units. Optionally, the processor 1010 integrates an application processor and a modem processor. The application processor mainly processes operations related to an operating system, a user interface, an application program, and the like. The modem processor mainly processes a wireless communication signal, such as a baseband processor. It may be understood that the modem processor may alternatively not be integrated into the processor 1010.

An embodiment of this application further provides a readable storage medium. The readable storage medium stores a program or instruction, and when the program or instruction is executed by a processor, processes of the foregoing call establishment method embodiment are implemented, and the same technical effects can be achieved. To avoid repetition, details are not described herein again.

The processor is the processor in the terminal in the foregoing embodiment. The readable storage medium includes a computer-readable storage medium, such as a computer read-only memory ROM, a random access memory RAM, a magnetic disk, or an optical disc.

An embodiment of this application further provides a chip. The chip includes a processor and a communication interface, the communication interface is coupled to the processor, and the processor is configured to run a program or instruction, to implement processes of the foregoing call establishment method embodiment, and can achieve the same technical effects. To avoid repetition, details are not described herein again.

It should be understood that the chip in this embodiment of this application may also be referred to as a system-on-a-chip, a system chip, a chip system, a system on chip, or the like.

An embodiment of this application provides a computer program product. The program product is stored in a storage medium, and the program product is executed by at least one processor to implement processes of the foregoing call establishment method embodiment, and can achieve the same technical effects. To avoid repetition, details are not described herein again.

It should be noted that, the terms "include", "comprise", and any variants thereof in the specification are intended to cover a non-exclusive inclusion. Therefore, a process, method, object, or apparatus that includes a series of elements not only includes such elements, but also includes other elements not specified expressly, or may include inherent elements of the process, method, object, or apparatus. Unless otherwise specified, an element limited by "include a/an..." does not exclude other same elements existing in the process, method, object, or apparatus that includes the element. Moreover, it should be noted that the scope of the method and apparatus in the embodiments of this application is not limited to executing the functions in the order shown or discussed, but may include executing the functions in a substantially concurrent manner or in a reverse order depending on the related functions. For example, the method described may be performed in an order different from that described, and various steps may be further added, omitted, or combined. In addition, features described with reference to some examples may be combined in other examples.

Based on the foregoing descriptions of the embodiments, persons skilled in the art may clearly understand that the methods of the foregoing embodiments may be implemented by software in addition to a necessary universal hardware platform or by hardware. In most circumstances, the former is an example implementation. Based on such understanding, the technical solutions of the embodiments of this application essentially, or the part contributing to a conventional technology may be implemented in a form of a computer software product. The computer software product may be stored in a storage medium (such as a ROM/RAM, a magnetic disk, or an optical disc), and include several instructions for instructing a terminal (which may be a mobile phone, a computer, a server, a network device, or the like) to perform the methods according to the embodiments of this application.

The embodiments of this application have been described above with reference to the accompanying drawings, but this application is not limited to the specific embodiments, and the specific embodiments are merely examples rather than limitative. Persons of ordinary skill in the art may make various variations under the teaching of this application without departing from the scope of protection, which is defined by the appended claims.

## Claims

1. A call establishment method, comprising:
sending (101), by a first terminal (41), a notification message to an i^{th} second terminal (42) in N second terminals in a case that a target call fails to be established by the first terminal (41), wherein the notification message is used to indicate a second terminal to establish the target call, N and i are both positive integers, and N is greater than or equal to i;
receiving (102), by the first terminal (41), a target message sent by the i^{th} second terminal (42);
in a case that the target message indicates that the i^{th} second terminal (42) fails to establish the target call and i is less than N, sending (104), by the first terminal (41), the notification message to an (i+1)^{th} second terminal in the N second terminals; and
in a case that the target message indicates that the i^{th} second terminal (42) successfully establishes the target call, displaying, by the first terminal (41), a first selection identifier and a second selection identifier, wherein the first selection identifier is used to select the first terminal (41) as an answering end of the target call, and the second selection identifier is used to select the i^{th} second terminal (42) as an answering end of the target call;
wherein a distance between each of the N second terminals and the first terminal (41) is less than or equal to a preset distance.

2. The method according to claim 1, wherein the target call is an emergency call; and the notification message comprises: location information of the first terminal (41) and call type information, wherein
the call type information indicates that the target call is an emergency call.

3. The method according to claim 1 or 2, wherein the sending (101), by the first terminal (41), the notification message to an (i+1)^{th} second terminal in the N second terminals comprises:
determining, by the first terminal (41), the (i+1)^{th} second terminal from the N second terminals based on a preset order, and sending the notification message to the (i+1)^{th} second terminal.

4. The method according to any one of claims 1 to 3, wherein in a case that the first terminal (41) fails to establish the target call, the method further comprises:
sending, by the first terminal (41), a first message to the N second terminals, wherein the first message is used to indicate the N second terminals to feed back network quality of networks accessed by the N second terminals;
receiving, by the first terminal (41), feedback messages of the N second terminals, wherein each feedback message comprises network quality information of a network accessed by a corresponding second terminal; and
determining, by the first terminal (41), the preset order according to the feedback messages of the N second terminals.

5. The method according to claim 1 or 2, wherein the target message indicates that the i^{th} second terminal (42) successfully establishes the target call; and
in a case that the first terminal (41) is selected as the answering end of the target call, after the receiving (102), by the first terminal (41), a target message sent by the i^{th} second terminal (42), the method further comprises:
answering, by the first terminal (41), the target call through short-range communication between the first terminal (41) and the i^{th} second terminal (42).

6. The method according to claim 1, wherein the method further comprises:
displaying, by the first terminal (41), target information, wherein the target information is used to indicate a terminal that currently establishes the target call.

7. A call establishment system, comprising a first terminal (41) and N second terminals, wherein
the first terminal (41) is configured to send a notification message to an i^{th} second terminal (42) in the N second terminals in a case that a target call fails to be established by the first terminal (41), wherein the notification message is used to indicate a second terminal to establish the target call, N and i are both positive integers, and N is greater than or equal to i;
the i^{th} second terminal (42) is configured to establish the target call in a case that the notification message is received, and send a target message to the first terminal (41) based on a result of establishing the target call; and
the first terminal (41) is further configured to receive the target message sent by the i^{th} second terminal (42), and send the notification message to an (i+1)^{th} second terminal in the N second terminals in a case that the target message indicates that the i^{th} second terminal (42) fails to establish the target call and i is less than N; and
display a first selection identifier and a second selection identifier in a case that the target message indicates that the i^{th} second terminal (42) successfully establishes the target call, wherein the first selection identifier is used to select the first terminal (41) as an answering end of the target call, and the second selection identifier is used to select the i^{th} second terminal (42) as an answering end of the target call;
wherein a distance between each of the N second terminals and the first terminal (41) is less than or equal to a preset distance.

8. The system according to claim 7, wherein the target call is an emergency call; and the notification message comprises: location information of the first terminal (41) and call type information, wherein
the call type information indicates that the target call is an emergency call.

9. The system according to claim 7 or 8, wherein
the first terminal (41) is configured to determine the (i+1)^{th} second terminal from the N second terminals based on a preset order, and send the notification message to the (i+1)^{th} second terminal.

10. The system according to any one of claims 7 to 9, wherein
the first terminal (41) is further configured to: in a case that the target call fails to be established, send a first message to the N second terminals, receive feedback messages of the N second terminals, and determine the preset order according to the feedback messages of the N second terminals, wherein
the first message is used to indicate the N second terminals to feed back network quality of networks accessed by the N second terminals; and each feedback message comprises network quality information of a network accessed by a corresponding second terminal.

11. The system according to claim 7 or 8, wherein the target message indicates that the i^{th} second terminal (42) successfully establishes the target call; and
in a case that the first terminal (41) is selected as the answering end of the target call, the first terminal (41) is further configured to: after the target message sent by the i^{th} second terminal (42) is received, answer the target call through short-range communication between the first terminal (41) and the i^{th} second terminal (42).

12. A terminal (600), comprising a processor (601) and a memory (602), wherein the memory (602) stores a program or instruction executable on the processor (601), which, when executed by the processor (601), causes the terminal (600) to perform the call establishment method according to any one of claims 1 to 6.

13. A computer readable storage medium, storing a computer program, which, when executed by a processor (601, 1010), causes the processor (601, 1010) to perform the call establishment method according to any one of claims 1 to 6.

## Patentansprüche

1. Ein Anrufaufbauverfahren, beinhaltend:
Senden (101), durch ein erstes Endgerät (41), einer Benachrichtigungsnachricht an ein i-tes zweites Endgerät (42) in N zweiten Endgeräten in einem Fall, dass ein Zielanruf durch das erste Endgerät (41) nicht aufgebaut werden kann, wobei die Benachrichtigungsnachricht verwendet wird, um gegenüber einem zweiten Endgerät anzugeben, dass dieses den Zielanruf aufbauen soll, N und i beide positive ganze Zahlen sind und N größer als oder gleich i ist;
Empfangen (102), durch das erste Endgerät (41), einer Zielnachricht, die durch das i-te zweite Endgerät (42) gesendet wird;
in einem Fall, dass die Zielnachricht angibt, dass das i-te zweite Endgerät (42) den Zielanruf nicht aufbauen kann, und i kleiner als N ist, Senden (104), durch das erste Endgerät (41), der Benachrichtigungsnachricht an ein (i + 1)-tes zweites Endgerät in den N zweiten Endgeräten; und
in einem Fall, dass die Zielnachricht angibt, dass das i-te zweite Endgerät (42) den Zielanruf erfolgreich aufbaut, Anzeigen, durch das erste Endgerät (41), eines ersten Auswahlidentifikators und eines zweiten Auswahlidentifikators, wobei der erste Auswahlidentifikator verwendet wird, um das erste Endgerät (41) als ein Annahmeende des Zielanrufs auszuwählen, und der zweite Auswahlidentifikator verwendet wird, um das i-te zweite Endgerät (42) als ein Annahmeende des Zielanrufs auszuwählen;
wobei eine Entfernung zwischen jedem von den N zweiten Endgeräten und dem ersten Endgerät (41) kleiner als oder gleich einer voreingestellten Entfernung ist.

2. Verfahren gemäß Anspruch 1, wobei der Zielanruf ein Notruf ist; und die Benachrichtigungsnachricht Folgendes beinhaltet: Standortinformationen des ersten Endgeräts (41) und Anruftypinformationen, wobei
die Anruftypinformationen angeben, dass der Zielanruf ein Notruf ist.

3. Verfahren gemäß Anspruch 1 oder 2, wobei das Senden (101), durch das erste Endgerät (41), der Benachrichtigungsnachricht an ein (i + 1)-tes zweites Endgerät in den N zweiten Endgeräten Folgendes beinhaltet:
Bestimmen, durch das erste Endgerät (41), des (i + 1)-ten zweiten Endgeräts aus den N zweiten Endgeräten basierend auf einer voreingestellten Reihenfolge und Senden der Benachrichtigungsnachricht an das (i + 1)-te zweite Endgerät.

4. Verfahren gemäß einem der Ansprüche 1 bis 3, wobei in einem Fall, dass das erste Endgerät (41) den Zielanruf nicht aufbauen kann, das Verfahren ferner Folgendes beinhaltet:
Senden, durch das erste Endgerät (41), einer ersten Nachricht an die N zweiten Endgeräte, wobei die erste Nachricht verwendet wird, um gegenüber den N zweiten Endgeräten anzugeben, dass diese eine Netzwerkqualität von Netzwerken, auf die die N zweiten Endgeräte zugreifen, rückmelden sollen;
Empfangen, durch das erste Endgerät (41), von Rückmeldungsnachrichten der N zweiten Endgeräte, wobei jede Rückmeldungsnachricht Netzwerkqualitätsinformationen über ein Netzwerk, auf das ein entsprechendes zweites Endgerät zugreift, beinhaltet; und
Bestimmen, durch das erste Endgerät (41), der voreingestellten Reihenfolge gemäß den Rückmeldungsnachrichten der N zweiten Endgeräte.

5. Verfahren gemäß Anspruch 1 oder 2, wobei die Zielnachricht angibt, dass das i-te zweite Endgerät (42) den Zielanruf erfolgreich aufbaut; und
in einem Fall, dass das erste Endgerät (41) als das Annahmeende des Zielanrufs ausgewählt ist, das Verfahren nach dem Empfangen (102), durch das erste Endgerät (41), einer Zielnachricht, die durch das i-te zweite Endgerät (42) gesendet wird, ferner Folgendes beinhaltet:
Annehmen, durch das erste Endgerät (41), des Zielanrufs durch Kurzstreckenkommunikation zwischen dem ersten Endgerät (41) und dem i-ten zweiten Endgerät (42).

6. Verfahren gemäß Anspruch 1, wobei das Verfahren ferner Folgendes beinhaltet: Anzeigen, durch das erste Endgerät (41), von Zielinformationen, wobei die Zielinformationen verwendet werden, um ein Endgerät anzugeben, das den Zielanruf aktuell aufbaut.

7. Ein Anrufaufbausystem, das ein erstes Endgerät (41) und N zweite Endgeräte beinhaltet, wobei
das erste Endgerät (41) konfiguriert ist, um in einem Fall, dass ein Zielanruf durch das erste Endgerät (41) nicht aufgebaut werden kann, eine Benachrichtigungsnachricht an ein i-tes zweites Endgerät (42) in den N zweiten Endgeräten zu senden, wobei die Benachrichtigungsnachricht verwendet wird, um gegenüber einem zweiten Endgerät anzugeben, dass dieses den Zielanruf aufbauen soll, N und i beide positive ganze Zahlen sind und N größer als oder gleich i ist;
das i-te zweite Endgerät (42) konfiguriert ist, um in einem Fall, dass die Benachrichtigungsnachricht empfangen wird, den Zielanruf aufzubauen und basierend auf einem Ergebnis des Aufbauens des Zielanrufs eine Zielnachricht an das erste Endgerät (41) zu senden; und
das erste Endgerät (41) ferner konfiguriert ist, um die durch das i-te zweite Endgerät (42) gesendete Zielnachricht zu empfangen und in einem Fall, dass die Zielnachricht angibt, dass das i-te zweite Endgerät (42) den Zielanruf nicht aufbauen kann, und i kleiner als N ist, die Benachrichtigungsnachricht an ein (i + 1)-tes zweites Endgerät in den N zweiten Endgeräten zu senden; und
in einem Fall, dass die Zielnachricht angibt, dass das i-te zweite Endgerät (42) den Zielanruf erfolgreich aufbaut, einen ersten Auswahlidentifikator und einen zweiten Auswahlidentifikator anzuzeigen, wobei der erste Auswahlidentifikator verwendet wird, um das erste Endgerät (41) als ein Annahmeende des Zielanrufs auszuwählen, und der zweite Auswahlidentifikator verwendet wird, um das i-te zweite Endgerät (42) als ein Annahmeende des Zielanrufs auszuwählen;
wobei eine Entfernung zwischen jedem von den N zweiten Endgeräten und dem ersten Endgerät (41) kleiner als oder gleich einer voreingestellten Entfernung ist.

8. System gemäß Anspruch 7, wobei der Zielanruf ein Notruf ist; und die Benachrichtigungsnachricht Folgendes beinhaltet: Standortinformationen des ersten Endgeräts (41) und Anruftypinformationen, wobei
die Anruftypinformationen angeben, dass der Zielanruf ein Notruf ist.

9. System gemäß Anspruch 7 oder 8, wobei
das erste Endgerät (41) konfiguriert ist, um das (i + 1)-te zweite Endgerät aus den N zweiten Endgeräten basierend auf einer voreingestellten Reihenfolge zu bestimmen und die Benachrichtigungsnachricht an das (i + 1)-te zweite Endgerät zu senden.

10. System gemäß einem der Ansprüche 7 bis 9, wobei
das erste Endgerät (41) ferner für Folgendes konfiguriert ist: in einem Fall, dass die Zielnachricht nicht aufgebaut werden kann, Senden einer ersten Nachricht an die N zweiten Endgeräte, Empfangen von Rückmeldungsnachrichten der N zweiten Endgeräte und Bestimmen der voreingestellten Reihenfolge gemäß den Rückmeldungsnachrichten der N zweiten Endgeräte, wobei
die erste Nachricht verwendet wird, um gegenüber den N zweiten Endgeräten anzugeben, dass diese eine Netzwerkqualität von Netzwerken, auf die die N zweiten Endgeräte zugreifen, rückmelden sollen; und jede Rückmeldungsnachricht Netzwerkqualitätsinformationen über ein Netzwerk, auf das ein entsprechendes zweites Endgerät zugreift, beinhaltet.

11. System gemäß Anspruch 7 oder 8, wobei die Zielnachricht angibt, dass das i-te zweite Endgerät (42) den Zielanruf erfolgreich aufbaut; und
in einem Fall, dass das erste Endgerät (41) als das Annahmeende des Zielanrufs ausgewählt ist, das erste Endgerät (41) ferner für Folgendes konfiguriert ist: nachdem die Zielnachricht, die durch das i-te zweite Endgerät (42) gesendet wird, empfangen wurde, Annehmen des Zielanrufs durch Kurzstreckenkommunikation zwischen dem ersten Endgerät (41) und dem i-ten zweiten Endgerät (42).

12. Ein Endgerät (600), das einen Prozessor (601) und einen Speicher (602) beinhaltet, wobei der Speicher (602) ein Programm oder eine Anweisung speichert, das/die auf dem Prozessor (601) ausführbar ist und bei Ausführung durch den Prozessor (601) bewirkt, dass das Endgerät (600) das Anrufaufbauverfahren gemäß einem der Ansprüche 1 bis 6 durchführt.

13. Ein computerlesbares Speicherungsmedium, das ein Computerprogramm speichert, das bei Ausführung durch einen Prozessor (601, 1010) bewirkt, dass der Prozessor (601, 1010) das Anrufaufbauverfahren gemäß einem der Ansprüche 1 bis 6 durchführt.

## Revendications

1. Un procédé d'établissement d'appel, comprenant :
l'envoi (101), par un premier terminal (41), d'un message de notification à un i^{ième} deuxième terminal (42) parmi N deuxièmes terminaux dans le cas où un appel cible échoue à être établi par le premier terminal (41), le message de notification étant utilisé pour indiquer à un deuxième terminal d'établir l'appel cible, N et i étant tous les deux des entiers positifs, et N étant supérieur ou égal à i ;
la réception (102), par le premier terminal (41), d'un message cible envoyé par le i^{ième} deuxième terminal (42) ;
dans le cas où le message cible indique que le i^{ième} deuxième terminal (42) échoue à établir l'appel cible et où i est inférieur à N, l'envoi (104), par le premier terminal (41), du message de notification à un (i + 1)^{ième} deuxième terminal parmi les N deuxièmes terminaux ; et
dans le cas où le message cible indique que le i^{ième} deuxième terminal (42) établit avec succès l'appel cible, l'affichage, par le premier terminal (41), d'un premier identifiant de sélection et d'un deuxième identifiant de sélection, le premier identifiant de sélection étant utilisé pour sélectionner le premier terminal (41) comme extrémité répondante de l'appel cible, et le deuxième identifiant de sélection étant utilisé pour sélectionner le i^{ième} deuxième terminal (42) comme extrémité répondante de l'appel cible ;
dans lequel une distance entre chacun des N deuxièmes terminaux et le premier terminal (41) est inférieure ou égale à une distance prédéfinie.

2. Le procédé selon la revendication 1, dans lequel l'appel cible est un appel d'urgence ; et le message de notification comprend : des informations d'emplacement du premier terminal (41) et des informations de type d'appel, dans lequel
les informations de type d'appel indiquent que l'appel cible est un appel d'urgence.

3. Le procédé selon la revendication 1 ou la revendication 2, dans lequel l'envoi (101), par le premier terminal (41), du message de notification à un (i + 1)^{ième} deuxième terminal parmi les N deuxièmes terminaux comprend :
la détermination, par le premier terminal (41), du (i + 1)^{ième} deuxième terminal parmi les N deuxièmes terminaux sur la base d'un ordre prédéfini, et l'envoi du message de notification au (i + 1)^{ième} deuxième terminal.

4. Le procédé selon l'une quelconque des revendications 1 à 3, le procédé comprenant en outre, dans le cas où le premier terminal (41) échoue à établir l'appel cible :
l'envoi, par le premier terminal (41), d'un premier message aux N deuxièmes terminaux, le premier message étant utilisé pour indiquer aux N deuxièmes terminaux de retourner une qualité de réseau de réseaux auxquels accèdent les N deuxièmes terminaux ;
la réception, par le premier terminal (41), de messages de retour des N deuxièmes terminaux, chaque message de retour comprenant des informations de qualité de réseau d'un réseau auquel accède un deuxième terminal correspondant ; et
la détermination, par le premier terminal (41), de l'ordre prédéfini selon les messages de retour des N deuxièmes terminaux.

5. Le procédé selon la revendication 1 ou la revendication 2, dans lequel le message cible indique que le i^{ième} deuxième terminal (42) établit avec succès l'appel cible ; et
le procédé comprenant en outre, dans le cas où le premier terminal (41) est sélectionné comme extrémité répondante de l'appel cible, après la réception (102), par le premier terminal (41), d'un message cible envoyé par le i^{ième} deuxième terminal (42) :
la réponse, par le premier terminal (41), à l'appel cible au moyen d'une communication à courte portée entre le premier terminal (41) et le i^{ième} deuxième terminal (42).

6. Le procédé selon la revendication 1, le procédé comprenant en outre :
l'affichage, par le premier terminal (41), d'informations cibles, les informations cibles étant utilisées pour indiquer un terminal qui établit actuellement l'appel cible.

7. Un système établissement d'appel, comprenant un premier terminal (41) et N deuxièmes terminaux, dans lequel
le premier terminal (41) est configuré pour envoyer un message de notification à un i^{ième} deuxième terminal (42) parmi les N deuxièmes terminaux dans le cas où un appel cible échoue à être établi par le premier terminal (41), le message de notification étant utilisé pour indiquer à un deuxième terminal d'établir l'appel cible, N et i étant tous les deux des entiers positifs, et N étant supérieur ou égal à i ;
le i^{ième} deuxième terminal (42) est configuré pour établir l'appel cible dans le cas où le message de notification est reçu, et envoyer un message cible au premier terminal (41) sur la base d'un résultat d'établissement de l'appel cible ; et
le premier terminal (41) est en outre configuré pour recevoir le message cible envoyé par le i^{ième} deuxième terminal (42), et envoyer le message de notification à un (i + 1)^{ième} deuxième terminal parmi les N deuxièmes terminaux dans le cas où le message cible indique que le i^{ième} deuxième terminal (42) échoue à établir l'appel cible et où i est inférieur à N ; et
afficher un premier identifiant de sélection et un deuxième identifiant de sélection dans le cas où le message cible indique que le i^{ième} deuxième terminal (42) établit avec succès l'appel cible, le premier identifiant de sélection étant utilisé pour sélectionner le premier terminal (41) comme extrémité répondante de l'appel cible, et le deuxième identifiant de sélection étant utilisé pour sélectionner le i^{ième} deuxième terminal (42) comme extrémité répondante de l'appel cible ;
dans lequel une distance entre chacun des N deuxièmes terminaux et le premier terminal (41) est inférieure ou égale à une distance prédéfinie.

8. Le système selon la revendication 7, dans lequel l'appel cible est un appel d'urgence ;
et le message de notification comprend : des informations d'emplacement du premier terminal (41) et des informations de type d'appel, dans lequel
les informations de type d'appel indiquent que l'appel cible est un appel d'urgence.

9. Le système selon la revendication 7 ou la revendication 8, dans lequel le premier terminal (41) est configuré pour déterminer le (i + 1)^{ième} deuxième terminal parmi les N deuxièmes terminaux sur la base d'un ordre prédéfini, et envoyer le message de notification au (i + 1)^{ième} deuxième terminal.

10. Le système selon l'une quelconque des revendications 7 à 9, dans lequel le premier terminal (41) est en outre configuré pour : dans le cas où l'appel cible échoue à être établi, envoyer un premier message aux N deuxièmes terminaux, recevoir des messages de retour des N deuxièmes terminaux, et déterminer l'ordre prédéfini selon les messages de retour des N deuxièmes terminaux, dans lequel le premier message est utilisé pour indiquer aux N deuxièmes terminaux de retourner une qualité de réseau de réseaux auxquels accèdent les N deuxièmes terminaux ; et chaque message de retour comprend des informations de qualité de réseau d'un réseau auquel accède un deuxième terminal correspondant.

11. Le système selon la revendication 7 ou la revendication 8, dans lequel le message cible indique que le i^{ième} deuxième terminal (42) établit avec succès l'appel cible ; et
dans le cas où le premier terminal (41) est sélectionné comme extrémité répondante de l'appel cible, le premier terminal (41) est en outre configuré pour : après que le message cible envoyé par le i^{ième} deuxième terminal (42) a été reçu, répondre à l'appel cible au moyen d'une communication à courte portée entre le premier terminal (41) et le i^{ième} deuxième terminal (42).

12. Un terminal (600), comprenant un processeur (601) et une mémoire (602), dans lequel la mémoire (602) stocke un programme ou une instruction exécutable sur le processeur (601), qui, lorsqu'il ou elle est exécuté par le processeur (601), amène le terminal (600) à mettre en œuvre le procédé d'établissement d'appel selon l'une quelconque des revendications 1 à 6.

13. Un support de stockage lisible par ordinateur, stockant un programme d'ordinateur qui, lorsqu'il est exécuté par un processeur (601, 1010), amène le processeur (601, 1010) à mettre en œuvre le procédé d'établissement d'appel selon l'une quelconque des revendications 1 à 6.
